# EUROPEAN PATENT SPECIFICATION

(11) **EP 1 883 758 B1**
(45) Date of publication and mention of the grant of the patent: **21.07.2010**
(21) Application number: 06738784.5
(22) Date of filing: 17.03.2006
(51) Int. Cl.: F16F 13/10, F16F 13/24, F16F 9/52

(54) **PRELOADED ONE-WAY VALVE ACCUMULATOR**
DRUCKSPEICHER MIT VORBELASTETEM RÜCKSCHLAGVENTIL
ACCUMULATEUR A CLAPET ANTIRETOUR PRECHARGE

(30) Priority: 18.05.2005 US 131174
(43) Date of publication of application: 06.02.2008
(73) Proprietor: Bell Helicopter Textron Inc., Hurst, Texas 76053 (US)
(72) Inventor: STAMPS, Frank Bradley, Colleyville, Texas 76034 (US); SMITH, Michael, Reaugh, Colleyville, TX 76034 (US); LEE, Taeoh, Keller, TX 76248 (US)
(74) Representative: Freeman, Avi
(86) International application number: PCT/US2006/009764
(87) International publication number: WO 2006/124112

(56) References cited:
- DE-A1- 3 718 858
- US-A- 3 461 991
- US-B1- 6 431 530
- PATENT ABSTRACTS OF JAPAN vol. 1998, no. 10, 31 August 1998 (1998-08-31) -& JP 10 121775 A (KAJIMA CORP), 12 May 1998 (1998-05-12)

## Description

### Field of the Invention

The present invention relates to improvements in isolation devices. In particular, the illustrated embodiments relate to improvements in isolation devices to remove the adverse effects of accumulators.

### Background

U.S. Patent Nos. 4,236,607 to Halwes et al.; 6,217,011 to Redinger; and 6,431,530 to Stamps et al. are examples of isolators.

### SUMMARY OF THE INVENTION

The invention as claimed in claim 1 includes a vibration isolator for connecting a first body and a second body, comprising: a housing having a first chamber, a second chamber, and a port connecting the first chamber to the second chamber and permitting fluid to flow between the first chamber and the second chamber, and the first and second chambers and the port defining a fluid reservoir; a gas-to-fluid accumulator in fluid communication with the fluid reservoir through a first one-way valve and a second one-way valve, the first one-way valve allowing fluid to pass only from the fluid reservoir to the accumulator and the second one-way valve allowing fluid to pass only from the accumulator to the fluid reservoir, at least one of the first and second one-way valves being preloaded to a predetermined force to permit fluid flow through the at least one-way valve only when fluid pressure exceeds the predetermined force. In the dependent claims preferred embodiments of the invention are defined.

### BRIEF DESCRIPTION OF THE DRAWINGS

The accompanying drawings facilitate an understanding of the various embodiments of this invention. In such drawings:

Fig. 1 is a cross-sectional view of a vibration isolator according to one embodiment of the present invention;

Fig. 2 is a cross-sectional view of a vibration isolator according to a second embodiment of the present invention;

Fig. 3 is an enlarged view of the vibration isolator of Fig. 1;

Fig. 4 is an enlarged view of the vibration isolator of Fig. 2;

Fig. 5 is a graph showing the operating oscillatory pressure of the embodiments of the present invention being with the range of normal operations; and

Fig. 6 is a perspective view of an aircraft structure incorporating one embodiment of the present invention.

### DETAILED DESCRIPTION OF ILLUSTRATED EMBODIMENTS

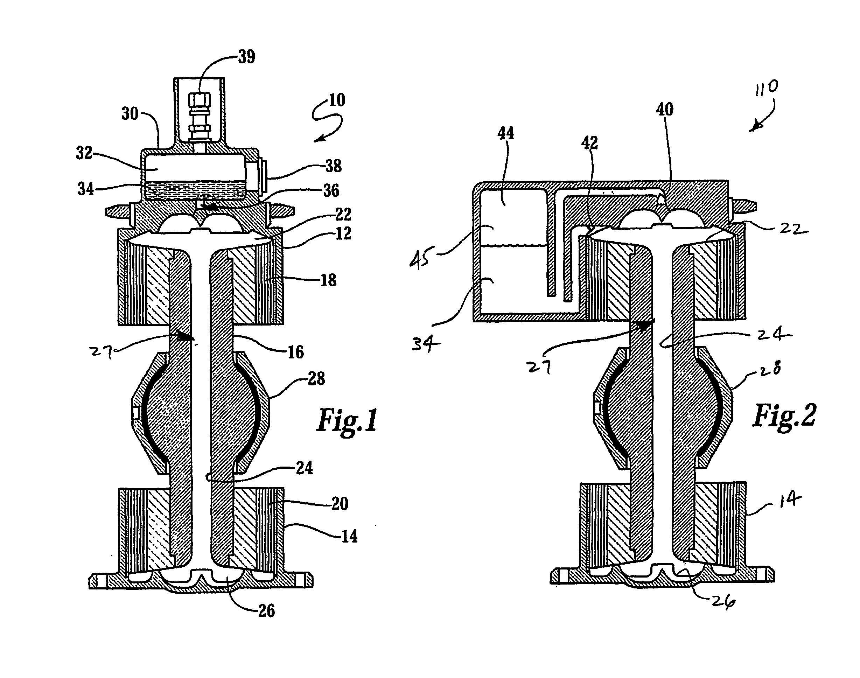

A vibration isolator according to one embodiment of the present invention is shown in FIG. 1 and generally designated 10. Vibration isolator 10 comprises an upper housing 12 and a lower outer housing 14. In this embodiment, upper housing 12 and lower housing 14 are not directly mechanically connected, but are connected indirectly via the other components of the device.

In addition to upper and lower housings 12 and 14, isolator 10 further comprises an inner cylinder 16 disposed within the volume defined by the concave portions of housings 12 and 14. In operation, inner cylinder 16 translates within this volume in reaction to motion imposed by a vibrating body.

Upper housing 12 is concentrically bonded to inner cylinder 16 by an elastomer tubeform bearing 18. Lower housing 14 is concentrically bonded to inner cylinder 16 by an elastomer tubeform bearing 20. The elastomer tubeform bearings 18 and 20 serve as compliant spring members for the isolator 10. The length of the tubeform bearings can vary according to the demands of a particular application, but the length is preferably sufficient to minimize elastomer bulging caused by oscillatory pressure in the device.

The concave inner surface of upper housing 12 and the upper surfaces of inner cylinder 16 and tubeform bearing 18 together define an upper fluid chamber 22. Upper fluid chamber 22 is connected to the lower portions of isolator 10 via a tuning port 24 passing through inner cylinder 16. The concave inner surface of lower housing 14 and the lower surfaces of inner cylinder 16 and tubeform bearing 20 together define a lower fluid chamber 26, which is in fluid communication with the lower end of tuning port 24. In addition to serving as compliant spring members for the isolator 10, elastomer tubeform bearings 18 and 20 serve as the fluid seals for fluid chambers 22 and 26.

The fluid chambers 22 and 26 and tuning port 24 are filled with an inviscid fluid 34 to form fluid reservoir 27 and pressurized to prevent cavitation. Isolator 10, as illustrated, incorporates a central elastomeric spherical bearing 28 in addition to the two elastomeric tubeform bearings 18 and 20.

In operation, the upper and lower housings 12 and 14 are mounted to the body to be isolated from vibration. The spherical bearing 28 is connected to the vibrating body. As the inner cylinder 16 moves within the isolator 10, the volume of one of chambers 22 and 26 will increase as the other decreases. This change in volume creates a pressure differential between the chambers 22 and 26 and a corresponding flow of the inviscid fluid 34 from one chamber to another, in the opposite direction of movement of the inner cylinder 16. This movement of fluid 34 within tuning port 24 causes an inertial force to be generated. Within a selected range of frequencies, this inertial force substantially or completely cancels out the elastomeric spring force in the isolator 10.

In order to stabilize internal fluid pressures, fluid and elastomer thermal expansion is accommodated through the use of an integral volume compensator 30. The volume compensator 30 alleviates the accumulation of excessive pressure and the risk of cavitation that would otherwise exist due to volume changes and associated pressure oscillations caused by operation of the isolator across a broad range of temperatures. In the isolator shown in FIG. 1, the compensator 30 takes the form of an air spring 32 filled with a gas, such as nitrogen. In this design, the compensator does not require a barrier between the gas 32 and the fluid 34. However, a compensator with a barrier between the gas 32 and the fluid 34 may be employed. Empirical data has shown that one embodiment of the present invention exhibits approximately +/-35% change in internal fluid pressure over a temperature range of -43 deg.C to 66 deg.C (45 deg. F to +150 deg. R). Accordingly, it is desirable that the pressure within the volume compensator 30 be set to at least 35% above the vapor pressure of the tuning fluid so as to avoid cavitation. The internal pressure is bounded at the high end by the mechanical stress limits of the isolator materials. The embodiment shown in FIG. 1 incorporates a sight glass 38 for visually determining the level of fluid in the compensator and a gas valve 39 for pressurizing the gas directly. In certain embodiments of the present invention, the inner surfaces of the isolator are shaped so as to allow bubbles to rise to the compensator when the isolator is disposed in its normal orientation.

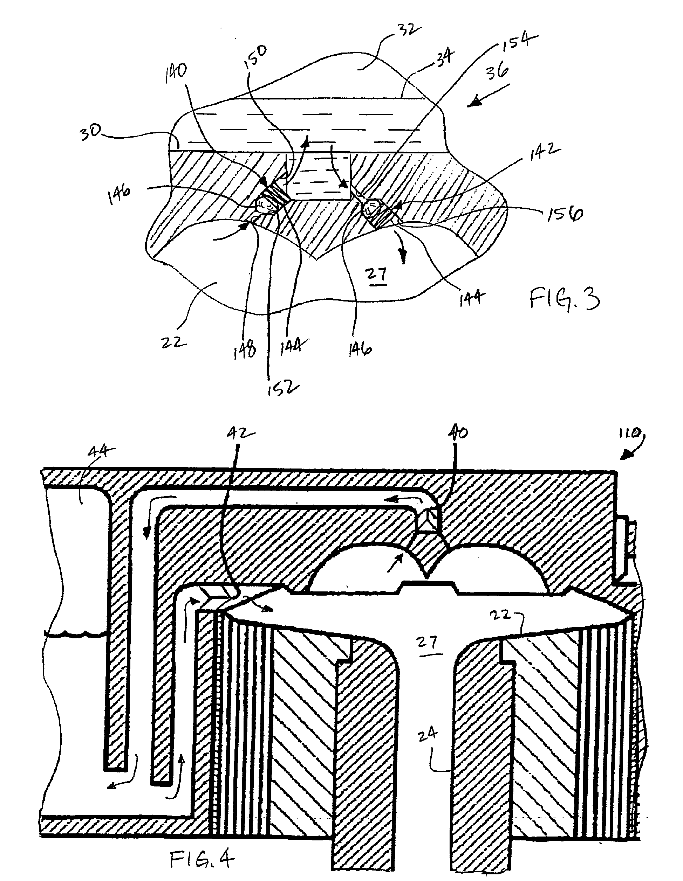

Isolator 10 communicates fluid pressure to the volume compensator 30 via preloaded valve assembly 36. As seen in Fig. 3, preloaded valve assembly 36 includes a first, preloaded one-way valve 140 and a second, preloaded one-way valve 142. In this embodiment, the first one-way valve 140 being an exit valve allows bubbles and fluid to pass from the fluid reservoir 27 to the compensator 30 once the preload pressure of the valve 140 has been overcome. Similarly, the second one-way valve 142 being an entrance valve allows fluid to pass from the compensator 30 to the fluid reservoir 27 once the preload pressure of the valve 142 has been overcome. With this design, any bubbles formed in the fluid reservoir 27 will float to the top of the fluid reservoir 22 and upon a sufficient pressure of the fluid in reservoir 27 to overcome the predetermined force applied against ball 146, they will pass through one-way valve 140 into compensator 30, where they are collected and added to the gas volume in the compensator 30. Also, during, for example, thermal expansion, fluid will pass from reservoir 27 to compensator 30 once the preload of the valve 140 has been overcome. Thus, fluid, both gas and liquid, may pass through the valve 140 upon the presence of sufficient pressure to overcome the preload of the valve 140.

Any volume lost in the form of bubbles from the fluid reservoir 27 to the compensator 30 through valve 140 is returned to the fluid reservoir 27 through one-way valve 142 in the form of liquid upon the presence of sufficient pressure to overcome the preload of the valve 142. The preload on valve 142 may be the same as that on valve 140 or different, including none at all, as desired.

The design of the preloaded one-way valves 140 and 142 may take any appropriate form that provides the ability of the valve to prohibit the passage of fluid therethrough unless the fluid has exceeded a certain, predetermined pressure. Thus, the valves 140 and 142 are preloaded to that predetermined force so that they will open only after the preload has been exceeded. The design of valves to accomplish this function may include numerous types of valve, only a few of which are described herein.

In the illustrated embodiment of Fig. 3, each one-way valve 140 and 142 takes the form of a mechanical spring 144 loaded with a ball 146. In particular, valve 140 includes a generally cylindrical inlet 148 and a generally cylindrical outlet 150, which has a larger diameter than the inlet 148. The outlet 150 includes a recessed portion 152 for receiving ball 146. The dimensions and configuration of the one-way valve 140 may take various forms as necessary for the desired performance of the isolator 10. For example, the dimensions of the inlet 148 and the force applied by spring 144 on ball 146 may be varied, as desired. In accordance with an embodiment of the invention, the force of the spring on the ball is predetermined and remains set to ensure that the valve 140 and the passage between the operating fluid in reservoir 27 and the compensator 30 remain closed over the normal operating pressure oscillations of the isolator 10. Thus, the presence of the compensator 30 does not adversely affect the overall performance of the isolator 10 and the addition of preloaded, one-way valves 140 and 142 as disclosed herein enhances performance of the isolator 10 by substantially eliminating the apparent presence of the compensator 30 within a limited pressure range.

One-way valve 142 may be formed in a substantially identical manner as set forth above with respect to one-way valve 140, except that the inlet 154 is adjacent the fluid in compensator 30 and the outlet 156 is adjacent the top of fluid reservoir 27. Upon a sufficient pressure of the fluid in compensator 30 to overcome the predetermined force applied against ball 146, the liquid 34 in compensator 30 passes through the valve 142 and into the reservoir 27. Also, although valve 142 may be configured so that the predetermined force needed for fluid to pass through valve 142 may be substantially identical to the predetermined force needed for fluid to pass through valve 140, the predetermined force for each valve 140 and 142 may be tailored for each valve independently, as desired.

Damping within isolator 10 is minimized through the use of elastomer bearings 18 and 20 having low damping characteristics and through the use of an inviscid fluid 34 within the device. Damping is additionally minimized through the use of a tuning port 24 having a relatively large value. A large diameter tuning port 24 reduces damping in the isolator 10 by minimizing the velocity of fluid 34 within the tuning port 24.

The fluid 34 used may vary from one embodiment to another, but it is desirable that the fluid 34 have a low viscosity and be noncorrosive. For example, fluid 34 of isolator 10 may be SPF I manufactured by LORD CORPORATION.RTM.. Other embodiments may incorporate mercury or hydraulic fluid having dense particulate matter suspended therein. Additionally, the mass of the fluid may in some embodiments be supplemented by the use of a solid slug disposed in the tuning port 24.

Similarly, the elastomer used for the isolator tubeform bearings 18 and 20 can vary, but it is desirable that the elastomer have a long fatigue life and exhibit low damping characteristics. For example, the elastomer may be LORD SPE X.RTM. elastomer manufactured by LORD CORPORATION.RTM.

FIGS. 2 and 4 shows another embodiment of the present invention in the form of isolator 110, wherein the gas-to-fluid accumulator 44 is connected to the isolator by a first, preloaded one-way valve 40 and a second, preloaded one-way valve 42. In this embodiment, the first one-way valve 40 being an exit valve allows bubbles to pass from the fluid reservoir 27 to the accumulator 44 once the pressure in the reservoir 27 has overcome the preload on the valve 40 and the second one-way valve 42 being an entrance valve allows fluid to pass from the accumulator 44 to the fluid reservoir 27 once the pressure in the accumulator 44 has overcome the preload on the valve 42. With this design, any bubbles formed in the fluid reservoir 27 will float to the top of the fluid reservoir 22 and pass through one-way valve 40 into accumulator 44, where they are collected and added to the gas volume in the accumulator 44. Any volume lost in the form of bubbles from the fluid reservoir 27 to the accumulator 44 through valve 40 is returned to the fluid reservoir 27 through one-way valve 42 in the form of fluid.

The construction illustrated in Fig. 2 permits the accumulator to be located in any position with respect to the reservoir 27 and illustrate another of the various configurations of the preloaded one-way valves of the subject application.

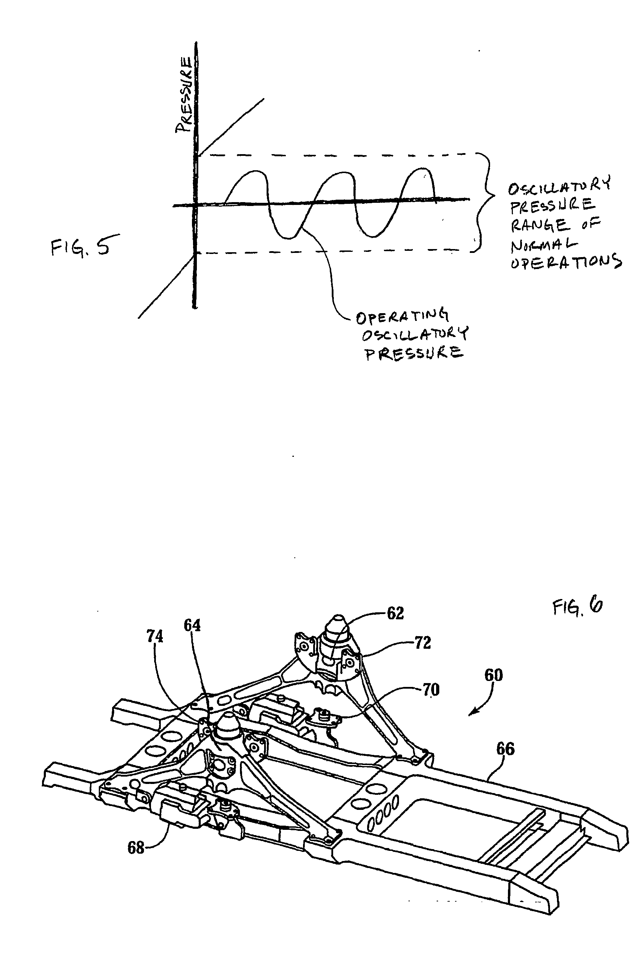

The one-way valves 40 and 42 function in a substantially identical manner as one-way valves 140 and 142 described above. However, as illustrated, one-way valves 40 and 42 are configured as preloaded flapper valves. Of course, the flapper valves 40 and 42 illustrate another embodiment for forming one-way valves and other, alternative appropriate one-way valve designs may be employed. As with the one-way valves 140 and 142 above, valves 40 and 42 are preloaded such that the accumulator 44 is isolated from the fluid in the reservoir 27 and the preloaded flapper valves are constructed so that the valves 40 and 42 remain closed over the normal operating pressure oscillations of the isolator 110. As with the valves 140 and 142 above, valves 40 and 42 permit substantially complete isolation of the accumulator 44 from the working fluid in reservoir 27 within the oscillatory pressure range of normal operation of the isolator 110. This is shown as a graph in Fig. 5 as the operating oscillating pressure of isolator 10, 110 functions with the oscillating pressure range of normal operations.

The use of preloaded, one-way valves such as 140, 142, 40 and 42 permit the use of physically smaller isolators 10, 110 since the performance (i.e., depth of isolation valley) is improved, allowing smaller tuning port 24 diameters and, thus, smaller associated overall piston areas. The resulting smaller, isolating devices are not only of lighter weight and less expensive, but they are also easier to utilize in more locations without design constraints associated with the larger-sized isolators. Further, since the use of the preloaded, one-way valves such as 40,42, 140 and 142 substantially isolates the accumulator 44 from the working fluid in reservoir 27, the accumulator 44 may be of the type with an air bubble 45, as illustrated, or can be another type of accumulator, such as a diaphragm accumulator. Further the use of the preloaded, one-way valves such as 40,42, 140 and 142 allows the accumulator 44 to be positioned below the upper most portion of the working fluid in reservoir 27. The preloaded, one-way exit valve such as 40, 140 is positioned at the upper most portion of the working fluid in reservoir 27 to scavenge bubbles from the working fluid.

One embodiment of a vibration isolator 10, 110 of the present invention as installed in a helicopter fuselage substructure is shown in FIG. 6. Helicopter fuselage substructure 60 comprises vibration isolators 62 and 64 mounted to a substructure frame 66 to work in combination with rotor pitch restraints 68 and 70. A vibrating apparatus, in this case a transmission and main rotor pylon assembly (not shown) is mounted between isolators 62 and 64 on mounting yokes 72 and 74. As described above, each of isolators 62 and 64 is compliant in the vertical axis due to the tubeform bearings 18, 20 resulting in countermotion of fluid 35 in tuning port 27 and also compliant about the two orthogonal horizontal rotational axes of pitch and roll due to the spherical bearing. For a pylon assembly mounted between isolators 62 and 64, the substructure will restrict motion in the vertical, the fore and aft, and the lateral axes, but will allow the assembly to pitch about the axis running from the spherical bearing in isolator 62 to the spherical bearing in isolator 64. Movement and vibration about this axis is restricted by pitch restraints 68 and 70.

It should be understood that the concepts disclosed herein are equally applicable to structures other than those illustrated herein in the attached figures. For example, the one-way valves disclosed above may be incorporated into vibration isolation structures such as those various isolation structures disclosed in U.S. Patent No. 4,236,607 to Halwes et al.

## Claims

1. A vibration isolator (10, 110) for connecting a first body and a second body, comprising:
a housing having a first chamber (22), a second chamber (26), and a port (24) connecting said first chamber (22) to said second chamber (26) and permitting fluid to flow between said first chamber (22) and said second chamber (26), and said first and second chambers (22, 26) and said port (24) defining a fluid reservoir (27);
a gas-to-fluid accumulator (30, 44) in fluid communication with said fluid reservoir (27) through a first one-way valve (40, 140) and a second one-way valve (42,142), said first one-way valve (40, 140) allowing fluid to pass only from said fluid reservoir (27) to said accumulator (30, 44) and said second one-way valve (42, 142) allowing fluid to pass only from said accumulator (30, 44) to said fluid reservoir (27),
**characterised by**:
at least one of said first and second one-way valves (40, 42, 140, 142) being preloaded to a predetermined force to permit fluid flow through said at least one-way valve (40, 42, 140, 142) only when fluid pressure exceeds said predetermined force.

2. A vibration isolator (10, 110) according to claim 1, wherein said fluid in said fluid reservoir (27) includes a gas and a liquid and said first one-way valve allows both gas and liquid to pass from said fluid reservoir (27) to said accumulator (30, 44).

3. A vibration isolator (10, 110) according to claim 1, wherein said accumulator (30, 44) is positioned on top of said fluid reservoir (27).

4. A vibration isolator (10, 110) according to claim 1, wherein said at least one of said first and second one-way valves (40, 42, 140, 142) being preloaded to a predetermined force includes said first one-way valve (40, 140) being preloaded to a first predetermined force to permit fluid flow through said first one-way valve (40, 140) only when fluid pressure exceeds said first predetermined force and said second one-way valve (42, 142) being preloaded to a second predetermined force to permit fluid flow through said second one-way valve (42, 142) only when fluid pressure exceeds said second predetermined force.

5. A vibration isolator (10, 110) according to claim 4, wherein said first predetermined force and said second predetermined force are substantially equal.

6. A vibration isolator (10, 110) according to claim 1, wherein said first predetermined force is such that at least one of said one-way valves (40, 42, 140, 142) remains closed over normal operating pressure oscillations of the fluid in said fluid reservoir (27).

7. A vibration isolator (10, 110) according to claim 4, wherein said first and second predetermined forces are such that each of said first and second one-way valves (40, 42, 140, 142) remains closed over normal operating pressure oscillations of the fluid in said fluid reservoir.

8. A vibration isolator (10, 110) according to claim 1, wherein at least one of said first and second one-way valves . (140, 142) includes a spring-loaded ball (146).

9. A vibration isolator (10, 110) according to claim 1, wherein said first and second one-way valves (140, 142) include a spring-loaded ball (146).

10. A vibration isolator (10, 110) according to claim 1, wherein at least one of said first and second one-way valves (40, 42) includes a flapper valve.

11. A vibration isolator (10, 110) according to claim 1, wherein said first and second one-way valves (40, 42) include a flapper valve.

12. A vibration isolator (10, 110) according to claim 1, wherein each of the first and second one-way valves (40, 42, 140, 142) is preloaded to a predetermined force, said predetermined force is such that each of said first and second one-way valves (40, 42, 140, 142) remains closed over normal operating pressure oscillations of the fluid in said fluid reservoir (27) to isolate the fluid in said fluid reservoir (27) from said accumulator (30, 44) within the oscillatory pressure range of normal operations.

13. A vibration isolator (10, 110) according to claim 1, further comprising: a spherical bearing (28) adapted to connect the vibration isolator (10, 110) to the first body.

14. A vibration isolator (10, 110) according to claim 1, wherein inner surfaces of the isolator (10, 110) are shaped so as to allow gas bubbles to rise to the top of the isolator (10, 110) when the isolator is disposed in its normal orientation.

15. A vibration isolator (10, 110) according to claim 1, wherein the vibration isolator (10, 110) is configured and arranged to isolate the second body from vibrations in the first body, the vibration isolator (10, 110) further comprising:
an outer cylinder (14), adapted to be connected to one of the first and second bodies and having an elongated inner volume;
an inner cylinder (16) movably disposed within the inner volume, the inner cylinder (16) and the inner volume defining the first and second chambers (22, 26) at either end of the inner cylinder (16);
a spring (18, 20) connecting the inner cylinder (16) to the outer cylinder (14).

16. A vibration isolator (10, 110) according to claim 15, wherein each of the first and second one-way valves (140, 142) is preloaded to a predetermined force, said predetermined force is such that each of said first and second one-way valves (40, 42, 140, 142) remains closed over normal operating pressure oscillations of the fluid in said fluid reservoir (27) to isolate the fluid in said fluid reservoir (27) from said accumulator (30, 44) within the oscillatory pressure range of normal operations.

17. A vibration isolator (10, 110) according to claim 15, further comprising: a spherical bearing (28) mounted to the inner cylinder (16) and adapted to be connected to the first body.

18. A vibration isolator (10, 110) according to claim 15, wherein said spring (18, 20) is an elastomer.

19. A vibration isolator (10, 110) according to claim 1, wherein the gas-to-fluid accumulator (30, 44) is in fluid communication with said fluid reservoir (27) through first and second passageways, each of said first and second passageways including respectively said first and second one-way valve (40, 42) for isolating the fluid in said fluid reservoir (27) from said accumulator (30, 44) within oscillatory pressure range of normal operations.

## Patentansprüche

1. Schwingungsentkoppler (10, 110) zum Verbinden eines ersten Körpers und eines zweiten Körpers, der Folgendes umfasst:
ein Gehäuse mit einer ersten Kammer (22), einer zweiten Kammer (26) und einer Anschlussöffnung (24), welche die erste Kammer (22) mit der zweiten Kammer (26) verbindet und einen Fluidfluss zwischen der ersten Kammer (22) und der zweiten Kammer (26) ermöglicht, wobei die erste und die zweite Kammer (22, 26) und die Anschlussöffnung (24) einen Fluidvorratsbehälter (27) definieren;
einen Gas-zu-Fluid-Druckspeicher (30, 44), der über ein erstes Einwegventil (40, 140) und ein zweites Einwegventil (42, 142) in Strömungsverbindung mit dem Fluidvorratsbehälter (27) steht, wobei das erste Einwegventil (40, 140) Fluid nur von dem Fluidvorratsbehälter (27) zu dem Druckspeicher (30, 44) strömen lässt und das zweite Einwegventil (42, 142) Fluid nur von dem Druckspeicher (30, 44) zu dem Fluidvorratsbehälter (27) strömen lässt,
**dadurch gekennzeichnet, dass**
mindestens eines des ersten und des zweiten Einwegventils (40, 42, 140, 142) auf eine vorgegebene Kraft vorbelastet ist, um einen Fluidfluss durch das mindestens eine Einwegventil (40, 42, 140, 142) nur dann zuzulassen, wenn der Fluiddruck die vorgegebene Kraft übersteigt.

2. Schwingungsentkoppler (10, 110) nach Anspruch 1, wobei das Fluid in dem Fluidvorratsbehälter (27) ein Gas und eine Flüssigkeit enthält und das erste Einwegventil das Strömen sowohl von Gas als auch von Flüssigkeit aus dem Fluidvorratsbehälter (27) zu dem Druckspeicher (30, 44) gestattet.

3. Schwingungsentkoppler (10, 110) nach Anspruch 1, wobei der Druckspeicher (30, 44) auf dem Fluidvorratsbehälter (27) angeordnet ist.

4. Schwingungsentkoppler (10, 110) nach Anspruch 1, wobei das mindestens eine des ersten und des zweiten Einwegventils (40, 42, 140, 142), das auf eine vorgegebene Kraft vorbelastet ist, beinhaltet, dass das erste Einwegventil (40, 140) auf eine erste vorgegebene Kraft vorbelastet ist, um einen Fluidfluss durch das erste Einwegventil (40, 140) nur zu gestatten, wenn der Fluiddruck die erste vorgegebene Kraft übersteigt, und dass das zweite Einwegventil (42, 142) auf eine zweite vorgegebene Kraft vorbelastet ist, um einen Fluidfluss durch das zweite Einwegventil (42, 142) nur zu gestatten, wenn der Fluiddruck die zweite vorgegebene Kraft übersteigt.

5. Schwingungsentkoppler (10, 110) nach Anspruch 4, wobei die erste vorgegebene Kraft und die zweite vorgegebene Kraft im Wesentlichen gleich sind.

6. Schwingungsentkoppler (10, 110) nach Anspruch 1, wobei die erste vorgegebene Kraft so gewählt ist, dass mindestens eines der Einwegventile (40, 42, 140, 142) während normaler Schwankungen des Arbeitsdrucks des Fluids in dem Fluidvorratsbehälter (27) geschlossen bleibt.

7. Schwingungsentkoppler (10, 110) nach Anspruch 4, wobei die erste und die zweite vorgegebene Kraft so gewählt sind, dass sowohl das erste als auch das zweite Einwegventil (40, 42, 140, 142) während normaler Schwankungen des Arbeitsdrucks des Fluids in dem Fluidvorratsbehälter geschlossen bleiben.

8. Schwingungsentkoppler (10, 110) nach Anspruch 1, wobei mindestens eines des ersten und des zweiten Einwegventils (140, 142) eine federbelastete Kugel (146) enthalten.

9. Schwingungsentkoppler (10, 110) nach Anspruch 1, wobei das erste und das zweite Einwegventil (140, 142) eine federbelastete Kugel (146) enthalten.

10. Schwingungsentkoppler (10, 110) nach Anspruch 1, wobei mindestens eines des ersten und des zweiten Einwegventils (40, 42) ein Klappenventil enthält.

11. Schwingungsentkoppler (10, 110) nach Anspruch 1, wobei das erste und das zweite Einwegventil (40, 42) ein Klappenventil enthalten.

12. Schwingungsentkoppler (10, 110) nach Anspruch 1, wobei sowohl das erste als auch das zweite Einwegventil (40, 42, 140, 142) auf eine vorgegebene Kraft vorbelastet sind, wobei die vorgegebene Kraft so gewählt ist, dass sowohl das erste als auch das zweite Einwegventil (40, 42, 140, 142) während normaler Schwankungen des Arbeitsdrucks des Fluids in dem Fluidvorratsbehälter (27) geschlossen bleiben, um das Fluid in dem Fluidvorratsbehälter (27) innerhalb des im Normalbetrieb anzutreffenden Druckschwingungsbereichs von dem Druckspeicher (30, 44) zu entkoppeln.

13. Schwingungsentkoppler (10, 110) nach Anspruch 1, der des Weiteren Folgendes umfasst: ein kugelförmiges Lager (28), das dafür geeignet ist, den Schwingungsentkoppler (10, 110) mit dem ersten Körper zu verbinden.

14. Schwingungsentkoppler (10, 110) nach Anspruch 1, wobei Innenflächen des Entkopplers (10, 110) so geformt sind, dass Gasblasen zum oberen Ende des Entkopplers (10, 110) aufsteigen können, wenn der Entkoppler in seiner normalen Ausrichtung angeordnet ist.

15. Schwingungsentkoppler (10, 110) nach Anspruch 1, wobei der Schwingungsentkoppler (10, 110) dafür konfiguriert und angeordnet ist, den zweiten Körper von Schwingungen in dem ersten Körper zu entkoppeln, wobei der Schwingungsentkoppler (10, 110) des Weiteren Folgendes umfasst:
einen äußeren Zylinder (14), der dafür ausgelegt ist, mit dem ersten oder dem zweiten Körper verbunden zu werden, und der ein längliches Innenvolumen aufweist;
einen inneren Zylinder (16), der beweglich in dem Innenvolumen angeordnet ist, wobei der innere Zylinder (16) und das Innenvolumen die erste und die zweite Kammer (22, 26) an jedem Ende des inneren Zylinders (16) definieren; und
eine Feder (18, 20), die den inneren Zylinder (16) mit dem äußeren Zylinder (14) verbindet.

16. Schwingungsentkoppler (10, 110) nach Anspruch 15, wobei sowohl das erste als auch das zweite Einwegventil (140, 142) auf eine vorgegebene Kraft vorbelastet sind, wobei die vorgegebene Kraft so gewählt ist, dass sowohl das erste als auch das zweite Einwegventil (40, 42, 140, 142) während normaler Schwankungen des Arbeitsdrucks des Fluids in dem Fluidvorratsbehälter (27) geschlossen bleiben, um das Fluid in dem Fluidvorratsbehälter (27) innerhalb des im Normalbetrieb anzutreffenden Druckschwingungsbereichs von dem Druckspeicher (30, 44) zu entkoppeln.

17. Schwingungsentkoppler (10, 110) nach Anspruch 15, der des Weiteren Folgendes umfasst: ein kugelförmiges Lager (28), das an dem inneren Zylinder (16) montiert ist und dafür ausgelegt ist, mit dem ersten Körper verbunden zu werden.

18. Schwingungsentkoppler (10, 110) nach Anspruch 15, wobei die Feder (18, 20) ein Elastomer ist.

19. Schwingungsentkoppler (10, 110) nach Anspruch 1, wobei der Gas-zu-Fluid-Druckspeicher (30, 44) über einen ersten und einen zweiten Durchgang in Strömungsverbindung mit dem Fluidvorratsbehälter (27) steht, wobei der erste und der zweite Durchgang das erste bzw. das zweite Einwegventil (40, 42) enthalten, um das Fluid in dem Fluidvorratsbehälter (27) innerhalb des im Normalbetrieb anzutreffenden Druckschwingungsbereichs von dem Druckspeicher (30, 44) zu entkoppeln.

## Revendications

1. Isolateur de vibrations (10, 110) pour relier un premier corps et un second corps, comprenant :
un logement comportant une première chambre (22), une seconde chambre (26), et un orifice (24) reliant ladite première chambre (22) à ladite seconde chambre (26) et permettant à un fluide de s'écouler entre ladite première chambre (22) et ladite seconde chambre (26), et lesdites première et seconde chambres (22, 26) et ledit orifice (24) définissant un réservoir de fluide (27) ;
un accumulateur gaz-fluide (30, 44) en communication fluide avec ledit réservoir de fluide (27) par l'intermédiaire d'un premier clapet de non-retour (40, 140) et d'un second clapet de non-retour (42, 142), ledit premier clapet de non-retour (40, 140) permettant à un fluide de passer seulement dudit réservoir de fluide (27) audit accumulateur (30, 44) et ledit second clapet de non-retour (42, 142) permettant à un fluide de passer seulement dudit accumulateur (30, 44) audit réservoir de fluide (27),
**caractérisé en ce que :**
au moins un desdits premier et second clapets de non-retour (40, 42, 140, 142) est préchargé à une force prédéterminée pour permettre l'écoulement de fluide à travers ledit (ou lesdits) clapet(s) de non-retour (40, 42, 140, 142) seulement lorsqu'une pression de fluide dépasse ladite force prédéterminée.

2. Isolateur de vibrations (10, 110) selon la revendication 1, dans lequel ledit fluide dans ledit réservoir de fluide (27) comprend un gaz et un liquide et ledit premier clapet de non-retour permet au gaz et au liquide de passer dudit réservoir de fluide (27) audit accumulateur (30, 44).

3. Isolateur de vibrations (10, 110) selon la revendication 1, dans lequel ledit accumulateur (30, 44) est positionné par-dessus ledit réservoir de fluide (27).

4. Isolateur de vibrations (10, 110) selon la revendication 1, dans lequel au moins un desdits premier et second clapets de non-retour (40, 42, 140, 142) préchargé à une force prédéterminée comprend ledit premier clapet de non-retour (40, 140) préchargé à une première force prédéterminée pour permettre l'écoulement de fluide à travers ledit premier clapet de non-retour (40, 140) seulement lorsqu'une pression de fluide dépasse ladite première force prédéterminée et ledit second clapet de non-retour (42, 142) préchargé à une seconde force prédéterminée pour permettre l'écoulement de fluide à travers ledit second clapet de non-retour (42, 142) seulement lorsqu'une pression de fluide dépasse ladite seconde force prédéterminée.

5. Isolateur de vibrations (10, 110) selon la revendication 4, dans lequel ladite première force prédéterminée et ladite seconde force prédéterminée sont sensiblement égales.

6. Isolateur de vibrations (10, 110) selon la revendication 1, dans lequel ladite première force prédéterminée est telle qu'au moins un desdits clapets de non-retour (40, 42, 140, 142) reste fermé au cours d'oscillations de pression de fonctionnement normal du fluide dans ledit réservoir de fluide (27).

7. Isolateur de vibrations (10, 110) selon la revendication 4, dans lequel lesdites première et seconde forces prédéterminées sont telles que chacun desdits premier et second clapets de non-retour (40, 42, 140, 142) reste fermé au cours d'oscillations de pression de fonctionnement normal du fluide dans ledit réservoir de fluide.

8. Isolateur de vibrations (10, 110) selon la revendication 1, dans lequel au moins un desdits premier et second clapets de non-retour (140, 142) comprend une bille à ressort (146).

9. Isolateur de vibrations (10, 110) selon la revendication 1, dans lequel lesdits premier et second clapets de non-retour (140, 142) comprennent une bille à ressort (146).

10. Isolateur de vibrations (10, 110) selon la revendication 1, dans lequel au moins un desdits premier et second clapets de non-retour (40, 42) comprend un clapet à battant.

11. Isolateur de vibrations (10, 110) selon la revendication 1, dans lequel lesdits premier et second clapets de non-retour (40, 42) comprennent un clapet à battant.

12. Isolateur de vibrations (10, 110) selon la revendication 1, dans lequel chacun des premier et second clapets de non-retour (40, 42, 140, 142) est préchargé à une force prédéterminée, ladite force prédéterminée est telle que chacun desdits premier et second clapets de non-retour (40, 42, 140, 142) reste fermé au cours d'oscillations de pression de fonctionnement normal du fluide dans ledit réservoir de fluide (27) pour isoler le fluide, dans ledit réservoir de fluide (27), dudit accumulateur (30, 44) à l'intérieur de la plage de pressions oscillatoires de fonctionnements normaux.

13. Isolateur de vibrations (10, 110) selon la revendication 1, comprenant en outre un roulement à rotule (28) adapté pour relier l'isolateur de vibrations (10, 110) au premier corps.

14. Isolateur de vibrations (10, 110) selon la revendication 1, dans lequel des surfaces intérieures de l'isolateur (10, 110) sont formées afin de permettre à des bulles de gaz de monter jusqu'à la partie supérieure de l'isolateur (10, 110) lorsque l'isolateur est disposé dans son orientation normale.

15. Isolateur de vibrations (10, 110) selon la revendication 1, dans lequel l'isolateur de vibrations (10, 110) est configuré et agencé pour isoler le second corps des vibrations dans le premier corps, l'isolateur de vibrations (10, 110) comprenant en outre :
un cylindre extérieur (14), adapté pour être relié à un des premier et second corps et comportant un volume intérieur allongé ;
un cylindre intérieur (16) disposé de façon mobile au sein du volume intérieur, le cylindre intérieur (16) et le volume intérieur définissant les première et seconde chambres (22, 26) aux deux extrémités du cylindre intérieur (16) ;
un ressort (18, 20) reliant le cylindre intérieur (16) au cylindre extérieur (14).

16. Isolateur de vibrations (10, 110) selon la revendication 15, dans lequel chacun des premier et second clapets de non-retour (140, 142) est préchargé à une force prédéterminée, ladite force prédéterminée est telle que chacun desdits premier et second clapets de non-retour (40, 42, 140, 142) reste fermé au cours d'oscillations de pression de fonctionnement normal du fluide dans ledit réservoir de fluide (27) pour isoler le fluide, dans ledit réservoir de fluide (27), dudit accumulateur (30, 44) à l'intérieur de la plage de pressions oscillatoires de fonctionnements normaux.

17. Isolateur de vibrations (10, 110) selon la revendication 15, comprenant en outre un roulement à rotule (28) monté sur le cylindre intérieur (16) et adapté pour être relié au premier corps.

18. Isolateur de vibrations (10, 110) selon la revendication 15, dans lequel ledit ressort (18, 20) est un élastomère.

19. Isolateur de vibrations (10, 110) selon la revendication 1, dans lequel l'accumulateur gaz-fluide (30, 44) est en communication fluide avec ledit réservoir de fluide (27) par l'intermédiaire de première et seconde voies de passage, chacune desdites première et seconde voies de passage comprenant lesdits premier et second clapets de non-retour (40, 42) pour isoler le fluide, dans ledit réservoir de fluide (27), dudit accumulateur (30, 44) à l'intérieur de la plage de pressions oscillatoires de fonctionnements normaux.
